(19) Europäisches Patentamt
European Patent Office
Office européen des brevets

(11) **EP 1 926 081 A1**

(12) **EUROPÄISCHE PATENTANMELDUNG**

(43) Veröffentlichungstag:
**28.05.2008 Patentblatt 2008/22**

(51) Int Cl.:
*G10L 15/22* (2006.01)  *G06F 17/27* (2006.01)

(21) Anmeldenummer: **07075982.4**

(22) Anmeldetag: **09.11.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK RS**

(30) Priorität: **22.11.2006 DE 102006055864**

(71) Anmelder: **Deutsche Telekom AG**
**53113 Bonn (DE)**

(72) Erfinder:
• **Runge, Fred**
**15838 Wünsdorf (DE)**
• **Johannsen, Wiebke**
**10961 Berlin (DE)**

• **Oberle, Frank**
**10623 Berlin (DE)**
• **van Ballegooy, Markus**
**53129 Bonn (DE)**
• **Burckhardt, Felix**
**10625 Berlin (DE)**
• **Stegmann, Joachim**
**64289 Darmstadt (DE)**
• **Englert, Roman**
**53913 Swisttal (DE)**
• **Eckert, Martin**
**12527 Berlin (DE)**

(74) Vertreter: **Drosch, Ulrich**
**Patentanwalt**
**Behringstrasse 43**
**14482 Potsdam (DE)**

(54) **Verfahren zur Dialoganpassung und Dialogsystem zur Durchführung**

(57) Die Erfindung betrifft ein Verfahren und ein Dialogsystem, welche eine flexible Anpassung automatisierter Dialoge an Nutzergruppen ermöglicht. Sie bezieht sich auf eine Anpassung der Dialogbeschaffenheit, welche durch Systemzustände, wie Meldungen und Prompts, durch Zustandsübergänge, deren logische Abfolge sowie durch die wahrnehmbare Gestaltung der Meldungen und Prompts gegeben ist. Die Art und Weise der Dialoganpassung ist durch eine Nutzerklasse bestimmt, welcher ein Benutzer während des Dialogs nach Regeln des Dialogsystems zugeordnet wird.

Erfindungsgemäß ist aber auch die Art und Weise, in welcher der Dialog an Personen einer Nutzerklasse angepasst wird, veränderlich. Dazu werden für Zustandsübergänge des systemseitigen Dialogteils nutzerklassenspezifische Zähler geführt, welche bei jedem Durchlaufen eines betreffenden Zustandsübergangs inkrementiert oder dekrementiert werden. Beim Überschreiten oder Unterschreiten eines einem Zähler, einer Gruppe von Zählern oder einer daraus abgeleiteten Größe zugeordneten Grenzwertes wird ein Adaptionsprozess gestartet, durch den die Beschaffenheit des systemseitigen Dialogteils nutzerklassenspezifisch verändert wird.

Fig. 3a

EP 1 926 081 A1

**Beschreibung**

Die Erfindung betrifft ein Verfahren zur Anpassung automatisierter Dialoge. Sie bezieht sich auf ein Verfahren, welches es ermöglicht, das Dialogverhalten automatisierter Systeme beziehungsweise die Beschaffenheit der auf ihnen ablaufenden Dialogteile zur Erhöhung des Bedienungskomforts an Eigenschaften und/oder Verhaltensweisen der Benutzer solcher Systeme anzupassen. Dabei erfolgt eine entsprechende Dialoganpassung bezogen auf Nutzergruppen, welchen die Benutzer vorzugsweise automatisch zugeordnet werden. Gemäß einer bevorzugten Ausbildung bezieht sich das Verfahren auf die Dialoganpassung bei Sprachdialogsystemen beziehungsweise bei Systemen, bei denen Dialoge zwischen den Nutzern und dem System zumindest teilweise in sprachlicher Form geführt werden. Die Erfindung betrifft ferner ein zur Durchführung des Verfahrens ausgebildetes Dialogsystem.

Die Bedienung von Automaten erfolgt zumindest dann, wenn der Bediener respektive Benutzer eines Automaten den Automaten zur Erledigung komplexerer Aufgaben nutzt, in vielen Fällen auf der Grundlage eines zwischen dem Benutzer und dem Automaten geführten Dialogs. Zu denken ist hierbei etwa an den Fahrkartenautomaten, der den Kauf von Tickets nicht nur für einige wenige festgelegte Strecken, sondern für ein größeres Netz, beispielsweise das Bahnnetz, unter Berücksichtigung unterschiedlichster Randbedingungen ermöglicht. Dabei wird der Benutzer durch den Automaten in einem Dialog dazu veranlasst, den Ausgangspunkt seiner Fahrt, sein Fahrtziel und die gewünschte Abfahrts- oder Ankunftszeit anzugeben sowie gegebenenfalls weitere Angaben, wie beispielsweise gewünschter Sitzplatz oder Raucher/Nichtraucher und ähnliches, zu machen. Hierzu fordert ihn der Automat beispielsweise durch eine visuelle Anzeige, in akustischer Form oder in audiovisueller Form auf. Je nach Ausführung des Systems gibt der Benutzer die entsprechenden Angaben mittels einzelner Tasten, einer Tastatur, anderer manueller Bedienelemente oder in gesprochener Form ein. Moderne, als Sprachdialogsysteme ausgebildete Systeme sind dabei sogar in der Lage, die einzelnen Informationen, wie Abfahrtsort oder Reiseziel, aus vollständigen Sätzen des Benutzers zu extrahieren. Zusätzlich verfügen manche Systeme, bei welchen die an den Benutzer gerichtete Aufforderung zur Eingabe entsprechender Informationen in sprachlicher Form erfolgt, über die Möglichkeit, in die vom System ausgegebenen Sprachkommandos, die so genannten Sprachprompts, hineinzusprechen und damit den Ablauf des Dialoges zu verkürzen. In der Praxis ist aber festzustellen, dass die Benutzer entsprechender Dialogsysteme sehr unterschiedliche Hemmschwellen beim Umgang mit den Automaten aufweisen und sich bei der Führung eines Dialogs mit dem Automaten teilweise sehr unterschiedlich verhalten. So kann man etwa Benutzer teilweise sehr grob in erfahrene und unerfahrene Benutzer unterteilen. Während der erfahrene Benutzer geübt und sicher im Umgang mit einem jeweiligen Dialogsystem ist und für ihn im Vordergrund steht, möglichst schnell an das Dialogziel, nämlich die Erfüllung seiner Wünsche, zu gelangen, ist für den unerfahrenen Benutzer eventuell eine behutsamere Dialogführung, welche ihn zu keiner Zeit verunsichert, von größerer Bedeutung. Je nach Komplexität des Systems und der von ihm zu erledigenden Aufgaben ist hinsichtlich der an die Benutzer gebundenen persönlichen Voraussetzungen und hinsichtlich des Verhaltens der Benutzer auch eine sehr viel stärkere Differenzierung zwischen den Benutzern gegeben. Insoweit ist es wünschenswert, automatisierte Dialogsysteme möglichst flexibel zu gestalten.

Daher sind bereits Lösungen bekannt geworden, bei denen der Ablauf eines jeweiligen, zwischen dem Benutzer und dem Automaten beziehungsweise Dialogsystem geführten Dialogs an Nutzereigenschaften und/oder das Nutzerverhalten angepasst wird. Derartige Lösungen sind häufig auf eine unmittelbare beziehungsweise sofortige Adaption des Dialogs an einen den Automaten jeweils bedienenden Benutzer ausgerichtet. So ist beispielsweise aus der US 5,493,608 eine Lösung bekannt geworden, bei welcher die Wiedergabegeschwindigkeit von Sprachprompts eines Dialogsystems an die Sprechgeschwindigkeit des jeweiligen Benutzers angepasst wird.

Es ist aber auch bekannt, das Dialogverhalten eines automatisierten Dialogsystems nicht an den einzelnen Benutzer anzupassen, sondern es an Gruppen von Benutzern zu adaptieren, wobei dann der einzelne Benutzer einer der dem System bekannten Gruppen zugeordnet wird. Entsprechendes wird beispielsweise von Komatani, K. und anderen in "User Modeling in Spoken Dialogue Systems for Flexible Guidance Generation", Proceedings of EUROSPEECH 2003, GENEVA, beschrieben. Nach der genannten Druckschrift werden Benutzer anhand ihres Verhaltens verschiedenen Klassen zugeordnet und der Sprachdialog entsprechend der einem Benutzer zugeordneten Klasse angepasst. Dabei ist aber sowohl die Art der Klassen - in der Druckschrift wird eine Unterteilung in die Klassen erfahrener Benutzer, unerfahrener Benutzer und eiliger Benutzer vorgenommen - als auch die bezüglich der unterschiedenen Klassen vorgenommene Adaption absolut starr. Das heißt, es gibt einen festen Dialogpfad für erfahrene Benutzer, einen anderen für unerfahrene Benutzer und schließlich einen weiteren, aber in jedem Falle feststehenden Dialogpfad für eilige Benutzer. Die entsprechende Zuordnung in die Nutzerklassen und deren Verkopplung mit den einzelnen Dialogpfaden ist dabei durch den Dialogbeziehungsweise Systementwickler fest vorgegeben.

Soweit die Dialoganpassung unter Nutzung Bayesscher Netze, wie unter anderem in Hjalmarsson, A., "Adaptive Spoken Dialogue Systems", Centre of Speech Technology, KTH, January 2005, erfolgt, erfordert die Anwendung der entsprechenden zugrunde liegenden statistischen Verfahren und Methoden einen immensen Rechenaufwand, der sich häufig auch auf die Ablaufzeit entsprechender Dialoge niederschlägt. Bei entsprechenden Verfahren werden die Dialoge beziehungsweise ihre Strukturen mittels so genannter Netzwerkgraphen unterschieden, deren Kanten, wie beispielsweise aus der EP 1 102 241 A1 bekannt, Übergangswahrscheinlichkeiten von einem Dialogzustand zu einem anderen zugeordnet sind.

Aus dem Stand der Technik sind ferner gruppen- beziehungsweise Nutzerklassenbasierte Informationssysteme oder, den Zugriff auf Informationen klassenbezogen leitende Systeme bekannt. Ein Beispiel hierfür ist die von Computersystemen beziehungsweise Netzwerken her bekannte Rechteverwaltung, in welcher die Rechte der einzelnen, an dem System partizipierenden Benutzer für den Zugriff auf Teile des Systems geregelt und verwaltet werden. Eine entsprechende Lösung wird beispielsweise in der DE 694 273 47 T2 beschrieben. Insoweit sind aus dem Stand der Technik auch Lösungen zur Verwaltung von Nutzerklassen bekannt.

Darüber hinaus sind aus dem Stand der Technik bereits Spracherkennungssysteme bekannt, mittels welcher aus Spracheingaben eines Benutzers die von ihm gesprochne Sprache bestimmbar ist, aber zum Beispiel auch auf sein Alter oder Geschlecht geschlossen werden kann. Sogar über emotionale Zustände des Benutzers, wie Ärger, Ungeduld oder Frust können mit Hilfe von den Spracherkennungssystemen zugeordneten Emotionserkennern Aussagen getroffen werden.

Aufgabe der Erfindung ist es, ein Verfahren anzugeben, welches eine flexible Anpassung automatisierter Dialoge an Nutzergruppen entsprechender Dialogsysteme ermöglicht, ohne dass dies zu Lasten der Systemperformance geht. Die Aufgabe besteht weiterhin darin, ein zur Durchführung eines solchen Verfahrens geeignetes Dialogsystem bereitzustellen.

Die Aufgabe wird durch ein Verfahren mit den Merkmalen des Hauptanspruchs gelöst. Ein die Aufgabe lösendes Dialogsystem ist durch den ersten Sachanspruch charakterisiert. Vorteilhafte Aus- beziehungsweise Weiterbildungen der Erfindung sind durch die jeweiligen Unteransprüche gegeben.

Das erfindungsgemäße Verfahren dient, wie bereits ausgeführt, der Anpassung der Beschaffenheit von zwischen automatischen Dialogsystemen und deren Benutzern geführten Dialogen an Eigenschaften und/oder Verhaltensweisen der Benutzer. Dabei wird unter der Beschaffenheit eines Dialogs dessen Erscheinungsweise verstanden, welche durch Dialogzustände in Form von Meldungen und Prompts, durch Zustandsübergänge, deren logische Abfolge zum Beispiel die Menübreite und -tiefe bestimmt, sowie durch die für den Benutzer wahrnehmbare Gestaltung der Meldungen und Prompts gegeben ist. Diese Beschaffenheit eines Dialogs wird während seines Ablaufs in einer Weise angepasst, die durch eine Nutzerklasse bestimmt ist, welcher der den Dialog jeweils führende Benutzer nach in dem betreffenden Dialogsystem hinterlegten und umgesetzten Regeln zugeordnet wird. Die Zuordnung des Benutzers zu der Nutzerklasse geschieht aufgrund während des Dialogs von ihm mitgeteilter oder durch das Dialogsystem automatisch, beispielsweise mittels Spracherkennung- und/oder Emotionserkennungskomponenten ermittelter Eigenschaften und/oder Verhaltensweisen des Benutzers und/ oder sie erfolgt aufgrund der Identifizierung des Benutzers durch das System und früher zu seiner Person erhobener Angaben.

Erfindungsgemäß ist jedoch die Art und Weise, in welcher der Dialog an den Benutzer, aufgrund seiner Zugehörigkeit zu einer Nutzerklasse, angepasst wird, veränderlich. Dies meint, dass der Dialog an einen Benutzer, welcher beispielsweise einer Nutzerklasse 2 beziehungsweise B innerhalb eines 10 Nutzerklassen verwaltenden Systems zugeordnet wird, entsprechend augenblicklich für die Klasse 2 beziehungsweise B bestehender Vorgaben angepasst wird, wobei jedoch die Art und Weise dieser Anpassung zu einem späteren Zeitpunkt, in welchem der Benutzer erneut mit dem System in Dialog tritt, eine gänzlich andere sein kann, selbst wenn der Benutzer während des zu dem späteren Zeitpunkt geführten Dialogs durch das System wiederum der Nutzerklasse 2 beziehungsweise B zugeordnet wird. Demnach ist die Art und Weise, wie ein nach dem Verfahren arbeitendes automatisiertes Dialogsystem sich auf die einer Nutzerklasse zuzuordnenden Benutzer einstellt, anders als nach dem Stand der Technik, nicht starr.

Bewerkstelligt wird dies dadurch, dass in dem Dialogsystem für ausgewählte Zustandsübergänge des systemseitigen Dialogteils nutzerklassenspezifische Nutzungszähler geführt werden. Diese nutzerklassenspezifischen Nutzungszähler werden bei jedem Durchlaufen eines betreffenden Zustandsübergangs während der Dialogabarbeitung inkrementiert oder dekrementiert. Beim Überschreiten oder Unterschreiten eines für einen jeweiligen Zähler, für eine Gruppe von Zählern oder für eine von den Zählern abgeleitete Größe festgelegten Grenzwertes wird dann ein Adaptionsprozess gestartet, durch den die Beschaffenheit des systemseitigen Dialogteils nutzerklassenbezogen verändert wird. Im Kontext der vorstehenden Ausführungen kommt beispielsweise ein Dekrementieren von Zählern in Betracht, sofern der jeweilige Zähler beim Durchlaufen des zugeordneten Zustandsübergangs von einem Startwert auf Null oder auf einen vorgegebenen unteren Wert zurückgezählt wird.

Der systemseitige Dialogteil wird folglich, ausgehend von einer bei seiner Implementierung im System gegebenen initialen, das heißt Anfangs-Beschaffenheit, klassenselektiv wiederholt an die Bedürfnisse der Mitglieder der jeweiligen Nutzerklasser adaptiert. Dabei kann die entsprechende Adaption, das heißt also zum Beispiel die Veränderung der Reihenfolge von Meldungen beziehungsweise Prompts oder ihres Inhalts oder ihrer äußeren Erscheinung vorzugsweise automatisch, erforderlichenfalls beziehungsweise im Einzelfall aber auch, aufgrund einer Übermittlung entsprechender, auf die Notwendigkeit einer Änderung aufmerksam machender Informationen, durch administratives Eingreifen erfolgen. Das Unterschreiten eines Grenzwertes für einen Zähler liegt beispielsweise vor, wenn dieser entsprechend den im System hinterlegten Regeln innerhalb eines festgelegten Intervalls nicht durch Inkrementieren auf einen vorgegebenen Wert gestiegen ist, also beispielsweise ein Zustandübergang innerhalb eines bestimmten Zeitraumes beziehungsweise einer bestimmten Anzahl von Dialogausführungen nicht mit einer für ihn vorgegebenen Häufigkeit durchlaufen wird oder aber, wenn, wie bereits ausgeführt, der Zähler, ausgehend von einem Startwert, bei jedem Durchlaufen des mit ihm gekoppelten Zustandsübergangs dekrementiert wird. Es ist eine Frage der Auslegung des Dialogsystem und/oder seiner Regeln, ob ein Zähler, eine Zählergruppe oder eine abgeleitete Größe nach einer erfolgten klassenspezifischen Adaption des Dialogs zurückgesetzt oder beispielsweise für den Zähler/die Zählergruppe beziehungsweise die abgeleitete Größe ein neuer Grenzwert im Hinblick auf eine eventuelle weitere spätere Adaption des Dialogs festgelegt wird.

Der Vorteil des erfindungsgemäßen Verfahrens liegt darin, dass das System sich während des Dialogablaufs nur hinsichtlich der für einen Benutzer ermittelten Klasse in seiner Beschaffenheit an den Benutzer anpassen muss, während die Art und Weise, in welcher diese Anpassung geschieht, davon unabhängig in gewissen zeitlichen Abständen automatisch verändert wird.

Vorzugsweise geschieht letzteres zudem, sofern möglich, im Hintergrund. Der zeitliche Abstand, in welchem die vorzugsweise im Hintergrund ablaufende Adaptierung erfolgt, wird dabei durch die für die besagten Nutzungszähler, Gruppen von Nutzungszählern oder aus den Nutzungszählern abgeleiteten Größen festgelegten Grenzwerte bestimmt. Das zugrunde liegende Prinzip des Führens nutzerklassenbezogener Zähler für die Zustandsübergänge und der Festlegung von Grenzwerten für diese Zähler beziehungsweise Zählergruppen oder aus ihnen abgeleitete Größen bringt dabei den weiteren Vorteil mit sich, dass die Art und Weise, in welcher der Dialogablauf für die Benutzer einer Nutzerklasse angepasst wird, erst dann verändert wird, wenn die für eine Nutzerklasse beziehungsweise für einen Zustandsübergang gesammelten Daten als statistisch ausreichend angesehen werden können. Die statistische Basis, auf deren Grundlage die gesammelten Daten als ausreichend betrachtet werden können, wird dabei für einen jeweiligen Zustandsübergang durch den für seinen ihm zugeordneten Zähler oder eine aus ihm abgeleitete Größe festgelegten Grenzwert bestimmt.

Wie die vorstehenden Ausführungen erkennen lassen, kommen für die Zuordnung eines Benutzers des Dialogsystems zu in dem System gehaltenen Nutzerklassen unterschiedliche Kriterien in Betracht. Zu nennen wären hierbei beispielhaft die Sprache beziehungsweise Nationalität eines Benutzers, sein Geschlecht und/oder sein Alter, gegebenenfalls aber auch sein emotionaler Zustand während des Dialogablaufs. Ferner kommen aber auch auf seinem sozialen oder technischen Umfeld beruhende Kriterien oder aber auch persönliche Vorlieben oder Interessen in Betracht. Zu denken wäre dabei beispielsweise an den Wohnort oder den augenblicklichen Aufenthaltsort des Benutzers, aber auch an die Frage, ob der Benutzer mit einem DSL-Anschluss ausgestattet ist und über ihn, aufgrund einer Registrierung bei einem Zugangsprovider, weitere Daten vorliegen. Hinsichtlich der angesprochenen Vorlieben und Interessen könnte ein Kriterium in dem mutmaßlichen Dialogziel des Benutzers zu sehen sein, so dass beispielsweise einem Benutzer mit bekannten Vorlieben von einem Internet-Musikportal ganz bestimmte Titel zuerst zum Download angeboten werden. Die zu einem Benutzer bekannten oder ermittelten Eigenschaften und/oder Verhaltensweisen können im Zuge der Nutzerklassifizierung, also der Zuordnung des Benutzers zu Nutzerklassen des Systems, auch mit zeitlichen, örtlichen oder technischen Parametern, wie zum Beispiel Verbindungsqualität, Bandbreite, Störgeräuschtyp und/oder -pegel, Endgerätemerkmale, Kommunikationskosten, Standortkoordinaten (und/oder Identifikatoren von Personen oder Gegenständen in der Nähe), Wetterlage, Interaktionshistorie und ähnlichen Kontextparametern, kombiniert werden. Beispielhaft seien die Möglichkeit der zeitweisen Einführung einer Nutzerklasse "männlich zur Weihnachtszeit" oder Nutzerklassen der Form "Kind mit Telefonvorwahl xy" oder "weiblich mit GPS-Daten für die Stadt z" genannt.

Je nach den für die Zuordnung zu Nutzerklassen verwendeten Kriterien werden die dazu benötigten Informationen, wie bereits ausgeführt, durch das Dialogsystem automatisch, vorzugsweise ohne bewusstes Zutun des Benutzers, oder aufgrund von Benutzereingaben erhoben oder aus Daten gewonnen, die zu dem betreffenden Benutzer früher ermittelt wurden. Letzteres setzt allerdings voraus, dass der Benutzer bei der Dialogausführung identifiziert wird, wobei auch dies wiederum durch unmittelbare Benutzereingaben oder automatisch erfolgen kann. Im Hinblick auf eine automatische Benutzeridentifizierung soll an dieser Stelle lediglich auf die Möglichkeit die Verwendung biometrischer Daten, der Anschlusskennung (zum Beispiel CLI beziehungsweise Calling Line Identity, HLR beziehungsweise Home Location Register, IP-Adresse und ähnliches) oder expliziter Benutzereingaben zur Person hingewiesen werden. Zu sonstigen Möglichkeiten der automatischen Erhebung von Daten, welche eine Zuordnung des Benutzers zu Nutzerklassen ermöglichen, sollen weitere Ausführungen noch gegeben werden.

Die Beschaffenheit des Dialogs wird online, das heißt während seines Ablaufs entsprechend der dem Benutzer dabei zugeordneten Nutzerklasse angepasst. Die wiederholte nutzerklassenselektive Adaption der Art und Weise dieser Online-Anpassung dagegen kann online oder offline erfolgen. Eine Offline-Anpassung wird zum Beispiel vorzugsweise bei Dialogautomaten erfolgen mit denen zeitgleich immer nur ein Benutzer kommuniziert.

Die Adaption der Art und Weise der während der Benutzung erfolgenden nutzerklassenabhängigen Online-Anpassung des Dialogs an den jeweiligen Nutzer erfolgt dabei in Zeiträumen, in denen gerade kein Dialog mit dem Dialogsystem geführt wird. Sofern komplexe Dialogsysteme stets zeitgleich mit einer Mehrzahl von Benutzern kommunizieren und sich folglich die Zählerstände rasch ändern, wird hingegen eine Online-Adaption zu bevorzugen sein. Dabei ist es denkbar, dass ein von einem Benutzer geführter Dialog, aufgrund des Über- oder Unterschreitens entsprechender Grenzwerte für Zähler, Zählergruppen oder abgeleitete Größen, während des weiteren Dialogablaufs eine Prozedur anstößt, durch welche die Art und Weise, in welcher der Dialog an Benutzer derjenigen Klasse, welcher dieser Benutzer aktuell zugeordnet ist, im Hintergrund verändert wird, der Dialog aber diesem Benutzer selbst noch entsprechend der "alten" für diese Nutzerklasse vorgesehenen Dialogbeschaffenheit entgegentritt.

Während der Benutzer eines nach dem Verfahren arbeitenden Dialogsystems im Hinblick auf den Ablauf eines von ihm gerade geführten Dialogs stets einer Nutzerklasse eindeutig zugeordnet ist, kann er gemäß einer bevorzugten Ausführungsform des Verfahrens zum Zweck der wiederholten Änderung der Art und Weise, in welcher der Dialog während des Ablaufs an Personen einer Nutzerklasse angepasst wird, gegebenenfalls gleichzeitig mehreren Nutzerklassen zugeordnet werden. Bezüglich der zuvor angesprochenen Kriterien kann also ein Benutzer für die bevorzugt im Hintergrund erfolgende in zeitlichen Abständen wiederholte nutzerklassenspezifische Dialoganpassung beispielsweise einer Nutzerklasse "männliche Benutzer", aber auch gleichzeitig einer Nutzerklasse "ältere Benutzer" zugeordnet werden. Dabei können in dem Dialogsystem Nutzerklassen auch durch Zusammenfassung anderer Nutzerklassen gebildet werden, wobei letztere gegebenenfalls durch das Dialogsystem weiterhin selbständig verwaltet werden. Mit Blick auf das letztgenannte Beispiel ist es also denkbar, dass durch das Dialogsystem gleichzeitig eine Nutzerklasse "männliche Benutzer", eine Nutzerklasse "ältere Benutzer" und eine Nutzerklasse "ältere männliche Benutzer" geführt wird, wobei im Hinblick auf die ausgewählten Zustandsübergängen zugeordneten Zähler zu den betreffenden Zustandsübergängen für jede der drei vorgenannten Nutzerklassen ein gesonderter Zähler verwaltet wird.

Wie bereits dargestellt, ist der Benutzer im Hinblick auf den Ablauf des von ihm gerade geführten Dialogs stets immer nur einer Nutzerklasse zugeordnet. Für die Frage, wonach diese Zuordnung erfolgt, gibt es ebenfalls mehrere Möglichkeiten. So ist es denkbar, dass der Benutzer für den gesamten Ablauf des Dialogs als Mitglied derjenigen Nutzerklasse behandelt wird, welcher er als erstes zugeordnet werden kann. Denkbar ist aber auch, dass er derjenigen Nutzerklasse zugeordnet wird, bezüglich welcher er den meisten für die Bildung der Nutzerklassen verwendeten Kriterien entspricht. Um wieder das vorgenannte Beispiel zu bemühen, heißt dies, dass beispielsweise als erstes erkannt wird, dass es sich bei einem einen Dialog startenden Benutzer um einen männlichen Benutzer handelt und dieser Benutzer folglich der Nutzerklasse "männliche Benutzer" zugeordnet wird. Denkbar ist es aber auch, dass das System erkennt, dass der betreffende Benutzer sowohl dem Kriterium männlich, als auch dem Kriterium älterer Benutzer entspricht und der Benutzer folglich der Nutzerklasse "ältere männliche Benutzer" zugeordnet wird. Darüber hinaus kann es aber auch vorgesehen sein, dass der Benutzer zwar im Hinblick auf den Ablauf des gerade von ihm geführten Dialogs stets einer Klasse zugeordnet ist, er aber dennoch im Verlauf des Dialogs wechselnden Nutzerklassen zugeordnet wird. Nach dem bereits mehrfach herangezogenen Beispiel ist es also denkbar, dass der Benutzer zu Beginn des Dialogs der breiteren Nutzerklasse "männliche Benutzer" zugeordnet ist, er aber im Verlauf des Dialogs, vor allem dann, wenn automatisch weitere Daten über ihn erhoben werden, auch als älterer Benutzer erkannt und er, die ursprüngliche Nutzerklasse wechselnd, der Nutzerklasse "ältere männliche Benutzer" zugeordnet wird. Dies kann insbesondere dann sinnvoll sein, wenn für einen Dialog grundsätzlich ein zunächst breit angelegter, das heißt ein weitestgehend nutzerklassenunabhängiger Dialogpfad vorgesehen ist und erst im Zuge der weiteren Verzweigung des Dialogs eine zunehmende Differenzierung der Dialogbeschaffenheit erfolgt, welche dann klassenspezifisch beziehungsweise klassenselektiv erfolgt. Auch wenn der Benutzer gemäß den vorstehenden Ausführungen im Verlauf des Dialogs gegebenenfalls wechselnden Nutzerklassen zugeordnet wird, so ist er aber bezogen auf den Dialogablauf gleichzeitig immer nur einer Nutzerklasse zugeordnet. Bezüglich der in zeitlichen Abständen wiederholt erfolgenden klassenspezifischen Dialogadaption kann er hingegen, wie bereits ausgeführt, gleichzeitig mehreren Nutzerklassen zugeordnet sein.

Von der Erfindung sind ferner auch Ausbildungsformen des Verfahrens umfasst, bei denen durch ein dazu ausgebildetes Dialogsystem nach darin hinterlegten Regeln im Bedarfsfalle neue Nutzerklassen gebildet werden. Dies kann beispielsweise auch durch die bereits erwähnte Zusammenfassung von Nutzerklassen erfolgen.

Gemäß einer möglichen Ausbildungsform des erfindungsgemäßen Verfahrens kann aber auch ein Dialog bereits bei seiner Implementierung diversifiziert werden. So kann der Dialog bei seiner Implementierung mehrere nutzerklassenspezifische initiale Beschaffenheiten aufweisen. Dies meint, dass der Dialog bereits bei seiner Implementierung so hinterlegt wird, dass er unabhängig von späteren nutzerklassenspezifischen Adaptionen von Anfang an für verschiedene Nutzerklassen unterschiedlich in Erscheinung tritt.

Weitere spezielle Ausbildungsformen des erfindungsgemäßen Verfahrens beziehen sich auf Dialogsysteme, bei denen der Dialog zumindest hinsichtlich des benutzerseitigen Dialogteils mindestens teilweise als Sprachdialog ausgebildet ist. Selbstverständlich können aber auch sowohl der benutzerseitige Dialogteil, als auch der systemseitige Dialogteil teilweise oder gar vollständig als Sprachdialog ausgebildet sein. Für derartige Dialogsysteme sind Möglichkeiten der automatischen Zuordnung eines Benutzers zu Nutzerklassen dadurch gegeben, dass der Benutzer nach in dem Dialogsystem hinterlegten Regeln durch Auswertung der Daten von Mitteln zur Sprachenidentifikation, von Mitteln zur Spracherkennung oder von Mitteln zur Sprecherklassifizierung den Nutzerklassen zugeordnet wird. Gemäß einer entsprechenden Ausbildungsform kann die Zuordnung des Benutzers zu Nutzerklassen dabei beispielsweise unter Berücksichtigung der durch Mittel zur Sprachenidentifikation (auch language identification) ermittelten, von dem Benutzer gesprochenen Sprache erfolgen. Entsprechende Sprachenidentifikationssysteme, die hierzu in der Lage sind, sind bereits bekannt. Ferner sind, wie bereits eingangs angedeutet, Spracherkennungssyteme bekannt, die es ermöglichen, den Sinn der von einer einen Sprachdialog führenden Person gesprochenen Worte zu ermitteln. Insoweit besteht bei einem Einsatz derartiger System selbstverständlich auch die Möglichkeit die nutzerklassenabhängige Dialoganpassung und/oder die Adaption der Art und Weise dieser Anpassung auf der Grundlage des Sinngehalts beziehungsweise der Bedeutung der von einem Benutzer in einem Sprachdialog gesprochenen Worte vorzunehmen.

Sofern Mittel zur Sprecherklassifizierung beziehungsweise ein in das Dialogsystem integriertes oder ein mit ihm interagierendes Sprecherklassifizierungsystem über ein geeignetes Wörterbuch beziehungsweise über eine geeignete Grammatik verfügen, ist es auch denkbar, die Klassenzuordnung unter Berücksichtigung eines auf der Basis der Sprecherklassifizierung festgestellten, von dem Benutzer gesprochenen Akzents, Dialekts oder Soziolekts vorzunehmen. Ebenso ist die Möglichkeit bekannt, mittels Sprecherklassifizierungssystemen aus der Stimme des Benutzers auf dessen Alter oder Geschlecht zu schließen. Dementsprechend ist es gemäß weiterer Ausbildungsformen des erfindungsgemäßen Verfahrens vorgesehen, die Klassenzuordnung auf der Grundlage des durch eine Stimmanalyse bestimmten Alters und/ oder Geschlechts des Benutzers vorzunehmen.

Unter dem Gesichtspunkt der automatischen Erhebung von Daten zum Zweck der Zuordnung eines Benutzers zu einer oder mehreren Nutzerklassen kommt ferner die Auswertung von Daten zum Dialogsystem gehörender oder mit ihm gekoppelter Mittel zur Emotionserkennung nach in dem Dialogsystem hinterlegten Regeln in Betracht.

Gemäß einer bevorzugten Weiterbildung der auf einer automatischen Erhebung von Daten für die Nutzerklassifikation beruhenden Verfahrensvarianten werden bei der Zuordnung der Nutzerklassen Konfidenzwerte berücksichtigt, welche ein Maß für die Zuverlässigkeit der erhobenen Daten darstellen. Vorzugsweise ist das Verfahrensregime zudem so gestaltet, dass mehreren, für die Zuordnung eines Benutzers zu einer Nutzerklasse in Betracht kommenden Kriterien eine Rangfolge zugeordnet wird. So erhalten möglicherweise zu einem durch das System identifizierten Benutzer früher erhobene beziehungsweise in einer Datenbank gehaltene Daten Vorrang gegenüber solchen, die beispielsweise durch das System im Moment des Dialogablaufs unter Nutzung eines Spracherkennungssystems automatisch erhoben werden. Dabei ist es beispielsweise denkbar, dass ein Benutzer aufgrund der Auswertung der Daten der Spracherkennung von dem System als "jugendlicher Nutzer" eingestuft wird, während er gleichzeitig aufgrund dessen, dass seine Identität ermittelt werden kann und zu seiner Person in einer im Zugriff des Systems befindlichen Datenbank gespeicherte Daten vorliegen, als 60jähriger Benutzer identifiziert wird. Gemäß entsprechender in dem Dialogsystem hinterlegter Regeln wird in einem solchen Falle gegebenenfalls der sich aus den Daten der Datenbank ergebenden Einstufung der Vorrang eingeräumt. Mit Blick auf die zuvor erwähnten Konfidenzwerte ist es aber auch denkbar, dass in dem vorstehend geschilderten Fall den automatisch erhobenen Daten der Vorrang gegeben wird, nämlich dann, wenn für diese eine sehr hohe Konfidenz festgestellt wird und aufgrund der Systemregeln angenommen werden muss, dass der entsprechende sich auf das Alter beziehende Datenbankeintrag nicht korrekt ist. Letzteres kommt vorzugsweise insbesondere dann in Betracht, wenn es sich bei den in der Datenbank enthaltenen Daten um fremd erhobene Daten handelt, also um Daten, welche durch ein anderes, von dem das Dialogsystem administrierenden Unternehmen verschiedenen Unternehmen (gegebenenfalls auch durch ein automatisiertes Verfahren) erhoben wurden, so dass diesen Daten im System folglich eine gewisse Unsicherheit zugeordnet wird.

Im Hinblick darauf, dass es nach dem erfindungsgemäßen Verfahren vorgesehen ist, für eine Mehrzahl von Zustandsübergängen eines gegebenenfalls umfangreichen und komplexen Dialogs Zähler zu führen, besteht eine weitere vorteilhafte Ausbildung der Erfindung darin, dass den einzelnen Zählern eine Wichtung zugeordnet wird. Sofern nun der Grenzwert für einen Zähler oder eine diesem zugeordnete Größe überschritten wird, bedeutet dies, dass die daraufhin im Hintergrund erfolgende Adaption der Beschaffenheit des systemseitigen Dialogteils nicht zwingend vordergründig nach dem Zähler, dessen Grenzwert überschritten wurde, ausgeführt wird, sondern dass gegebenenfalls andere Zustandsübergänge mit einem ebenfalls hohen, aber noch unterhalb des Grenzwertes liegenden Zählerstand aufgrund einer höheren Gewichtung eine stärkere Berücksichtigung bei der Adaption finden. Dies soll an späterer Stelle im Zusammenhang mit dem Ausführungsbeispiel nochmals näher erläutert werden.

Ein zur Lösung der Aufgabe und zur Durchführung des Verfahrens geeignetes automatisiertes Dialogsystem ist selbstverständlich durch Hard- und Softwarekomponenten realisiert. Dabei umfasst es eine Steuer- und Verarbeitungseinheit mit Mitteln zur Eingabenerkennung und Auswertemitteln zur Auswertung von Eingaben, einen oder mehrere Speicher, Ein- und Ausgabemittel zur Entgegennahme von Nutzer oder Administratoreingaben sowie zur Ausgabe von Systemmitteilungen und Prompts. Die Ausgabemittel können visueller und/ oder akustischer und/oder taktiler Art sein. Als Eingabemittel kommen unter Berücksichtigung multimodaler Eingabeverfahren Mikrofone für Sprachanweisungen der Benutzer sowie Tastaturen, berührungssensitive Bildschirme (Touchscreens), Zeigegeräte in Form einer Computermaus oder damit vergleichbarer Mittel, Griffel sowie Neigungs- oder Bewegungssensoren in Betracht. Bestandteil des Dialogsystems ist zudem eine in dessen Speicher oder Speichern gehaltene Nutzerklassenverwaltung.

Erfindungsgemäß verfügt das entsprechende Dialogsystem darüber hinaus über eine Mehrzahl von ebenfalls in dem oder den Speichern gehaltenen Zählern, welche Systemübergängen von in dem System implementierten Dialogen nutzerklassenbezogen zugeordnet werden, und ferner über ein in dem oder den Speichern hinterlegtes Regelwerk zur Auswertung der Zähler und zur nutzerklassenselektiven Adaption von Dialogen durch die Steuer- und Verarbeitungseinheit auf der Grundlage der Anwendung der entsprechenden Regeln. Das System kann durch hard- und softwarebasierte Mittel zur Spracherkennung, zur Handschriftenerkennung und/oder zur Emotionserkennung erweitert sein.

Aspekte der Erfindung sollen nachfolgend nochmals in der Form eines Ausführungsbeispiels erläutert werden. In den zugehörigen Zeichnungen zeigen:

Fig. 1a:    Ein Beispiel für ein Dialogmodell

Fig. 1b:    Eine feiner aufgelöste Darstellung des Zustands 3 aus dem Dialogmodell gemäß Fig. 1a

Fig. 2a:    Das Dialogmodell gemäß Fig. 1a nach einer nutzerklassenbezogenen Adaption

Fig. 2b:    Eine feiner aufgelöste Darstellung des Zustands 3 des modifizierten beziehungsweise adaptierten Dialogmodells nach Fig. 2a

Fig. 3a:    Die Teilstruktur eines automatisierten Sprachdialogsystems in einer schematischen Darstellung

Fig. 3b:    Die schematische Darstellung einer möglichen Struktur für in der Nutzerklassenverwaltung des Systems gemäß Fig. 3a gehaltene klassenspezifische Daten

Fig. 4:    Ein Beispiel für die Entwicklung klassenspezifischer Dialogstrukturen in einer schematischen Darstellung

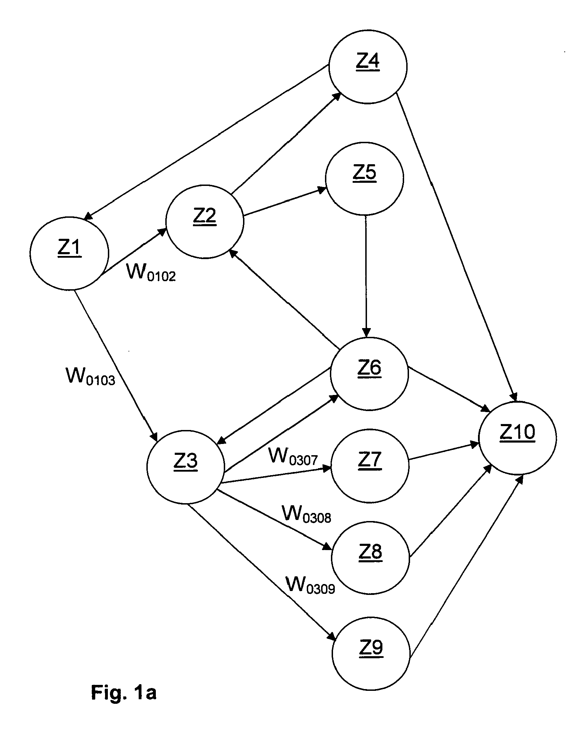

Die Fig. 1a zeigt ein Beispiel für ein Dialogmodell, bei welchem die Dialogzustände, also Meldungen, Prompts und Menüoptionen, und die zwischen ihnen über Zustandsübergänge bestehenden Beziehungen in einer Baumstruktur dargestellt sind. Dabei kennzeichnen die mit Zustands-Nummern versehenen Kreise einzelne Dialogzustände und die sie verbindenden Pfeile die Zustandsübergänge, wobei ein entsprechender Kreis im Allgemeinen einen komplexeren Dialogzustand kennzeichnet, welcher sich gegebenenfalls aus einer Mehrzahl unmittelbar miteinander verknüpfter Zustände, wie Prompts oder Teilprompts, zusammensetzt.

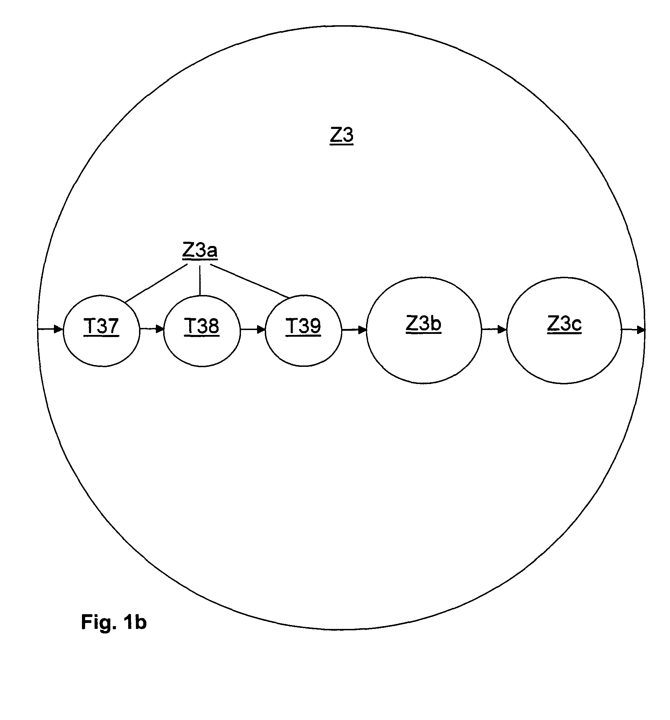

In der Fig. 1b ist beispielhaft der Zustand Z3 des Dialogmodells nach der Fig. 1a nochmals in detaillierter Form dargestellt. Danach handelt es sich bei dem Zustand Z3 um einen Systemprompt und dessen zugehörige Auswertung im Hinblick auf nachfolgende mögliche Verzweigungen beziehungsweise Zustandsübergänge des Dialogs. Dabei sei angenommen, dass der komplexe Zustand Z3 einen Promptteil Z3a mit mehreren Teilprompts T37, T38, T39, einen Zustand Z3b, in welchem nach der Ausgabe der Teilprompts T37, T38, T39 auf eine entsprechende Eingabe einer den Dialog mit dem System führenden Personen gewartet wird, und einen Auswertungszustand Z3c für die betreffenden Eingaben umfasst. Wie zu erkennen, sind von dem komplexen Zustand Z3, welcher in seiner Gesamtheit als Prompt mit zugehöriger Auswertung anzusehen ist, gemäß dem Beispiel drei Teilprompts T37, T38, T39 umfasst. Zu einem bestimmten zunächst betrachteten Zeitpunkt werden diese Teilprompts T37, T38, T39 beim Durchlaufen des komplexen Zustands Z3 in der Reihenfolge T37, T38, T39 durch das System ausgegeben. Eine dialogführende Person wird hierdurch dazu aufgefordert, zwischen den nachfolgenden möglichen Optionen Z7, Z8 und Z9 auszuwählen. Die Zustandsübergänge, welche je einen, aufgrund der von den dialogführenden Personen jeweils getroffenen Auswahl erfolgenden Übergang zu einer der vorgenannten, dem Zustand Z3 nachfolgenden Optionen darstellen, sind in der Fig. 1a mit $W_{0307}$, $W_{0308}$ und $W_{0309}$ bezeichnet.

Es sei nun angenommen, dass für die vorgenannten Zustandsübergänge in dem Dialogsystem entsprechend dem erfindungsgemäßen Grundprinzip nutzerklassenspezifisch Nutzungszähler geführt werden. Ferner sei angenommen, dass die entsprechenden Zähler in dem Dialogsystem mit einer Wichtung versehen sind, wobei der Zustandsübergang $W_{0307}$ mit 2, der Zustandsübergang $W_{0308}$ mit 3,5 und der Zustandsübergang $W_{0309}$ mit 5,5 gewichtet ist. Die entsprechenden Wichtungskoeffizienten berechnen sich dabei nach folgender Beziehung:

$$w_{ij} = C_{ij} + t_n + g_K \times \sum_{m=1}^{n} (t_n - t_m),$$

wobei

$W_{ij}$    den Wichtungsfaktor für den Dialogübergang i→j,

$t_n$      die Zeit vom Promptbeginn bis zum Abspielen des letzten angehörten Teilprompts,

$t_m$      die Zeit vom Promptbeginn bis zum Abspielen des m-ten Teilprompts;

$g_K$      einen Gedächtnisfaktor, welcher den Gedächtnisaufwand des Mitgliedes einer Nutzerklasse widerspiegelt,

C      eine gegebenenfalls festgelegte Konstante,

darstellen und wobei n, von 1 beginnend, der Index des jeweils letzten angehörten Teilpromts und für jedes $w_{ij}$ verschieden ist.

Ist nun für die Summe der den vorgenannten Zustandsübergängen jeweils zugeordneten Zähler bezogen auf eine ganz bestimmte Nutzerklasse A ein Grenzwert von 999 vorgegeben und wird dieser Grenzwert überschritten, erfolgt bezüglich dieser Nutzerklasse A eine Adaption des Dialogs. Vorliegend sei angenommen, dass durch die Benutzer der entsprechenden Nutzerklasse, ausgehend vom Zustand Z3, 190 Mal die Option 7, 410 Mal die Option 8 und 400 Mal die Option 9 gewählt wurde. Durch die nun gestartete Adaption des Dialogs soll beispielsweise erreicht werden, dass im Hinblick auf die festgestellten Übergänge die Teilprompts, welche den Benutzer auf die entsprechenden nachfolgenden Optionen hinweisen, entsprechend ihrer festgestellten Relevanz in veränderter Reihenfolge angeordnet werden. Würde hierbei die Wichtung der Zustandsübergänge außer Betracht bleiben und die Neuordnung der Prompts T37, T38, T39 ausschließlich nach den Zählerständen erfolgen, wären die Teilprompts T37, T38, T39 in Abänderung der Fig. 1b in der Reihenfolge T38, T39, T37 anzuordnen. Aufgrund der Berücksichtigung der gegebenen Wichtung ergibt sich jedoch ein anderes Anpassungsszenario, wobei die Teilprompts in der Reihenfolge T39, T38, T37 angeordnet werden.

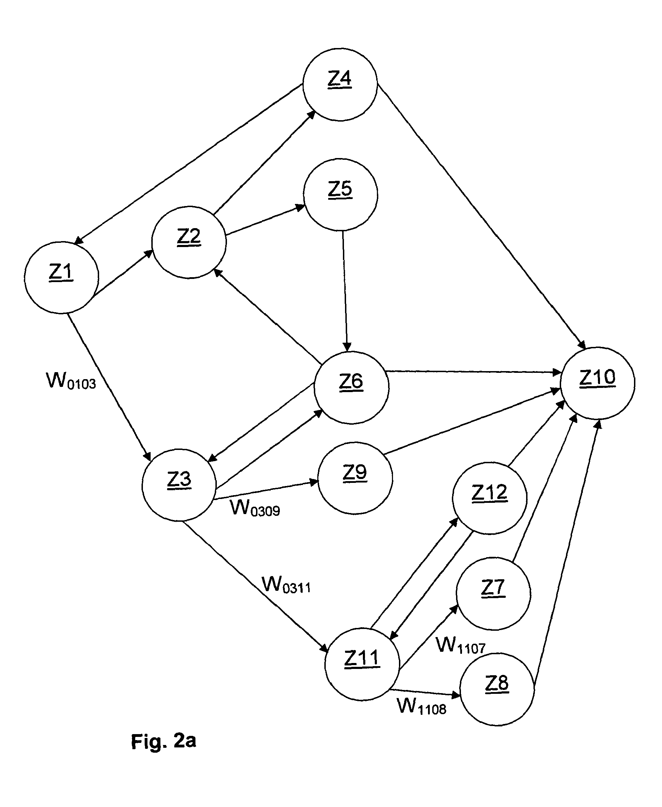

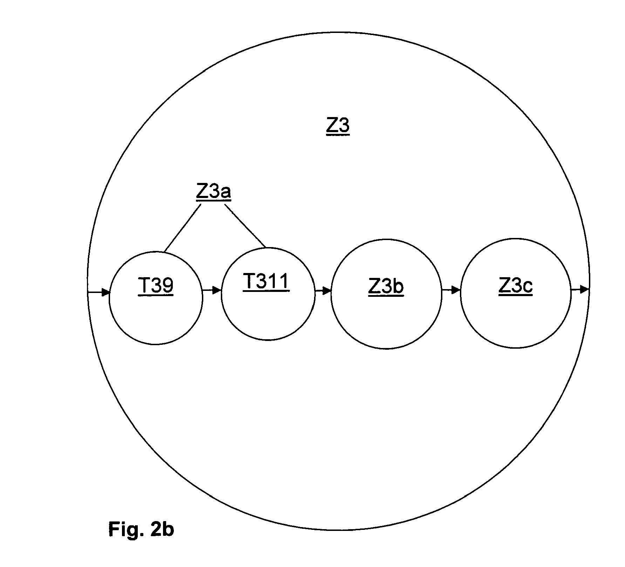

Nach dem zuvor erläuterten Beispiel ist es aber auch denkbar, nicht lediglich die Teilprompts T37, T38, T39 des komplexen Zustandes beziehungsweise des Prompts Z3 in ihrer Reihenfolge umzuorganisieren, sondern eine Veränderung der logischen Abfolge der dem Zustand Z3 nachfolgenden Zustände beziehungsweise Menüpunkte vorzunehmen. Diese Möglichkeit wird durch die Figuren 2a und 2b verdeutlicht. Diese zeigen eine beispielhafte Modifikation des in den Figuren 1a und 1b gezeigten Dialogs. Danach wird aufgrund der zuvor betrachteten Zählerstände für die Zustandsübergänge der Dialog dahingehend verändert, dass bei dem Dialog hinsichtlich der sich an den Zustand Z3 anschließenden Dialogzustände die Menübreite verringert und die Menütiefe erhöht wird. Dazu wird zwischen dem Zustand Z3 und den Zuständen Z7 und Z8 ein neuer, zusätzlicher Menüpunkt Z11 mit zugehörigen Zustandsübergängen W1107 und $W_{1108}$ eingefügt. Im Zustand Z3 werden gemäß Fig. 2b nun nur noch zwei Teilprompts T39, T311 ausgegeben, und zwar zunächst ein Teilprompt T39, welcher auf die Menüoption beziehungsweise den Zustand Z9 verweist, und danach ein Teilprompt T311, welcher auf den Zustand Z11 und über diesen auf die Zustände Z7 und Z8 verweist.

Es sei nochmals darauf hingewiesen, dass für die einzelnen betrachteten Zustandsübergänge mehrere Zähler geführt werden, da die Zählung der Zustandsübergänge immer nutzerklassenbezogen erfolgt. Dies schließt jedoch nicht aus, dass zu einem oder mehreren Zustandsübergängen ein gemeinsamer Zähler für zwei oder mehr Nutzerklassen geführt wird. In jedem Falle erfolgt jedoch auch die vorstehend erläuterte Adaption immer nutzerklassenbezogen. Das heißt, dass sich im Hinblick auf eine andere als die vorstehend betrachtete Nutzerklasse A, also beispielsweise für eine Nutzerklasse B, zum Beispiel aufgrund unterschiedlicher Wichtungen, eine vollkommen andere Adaption des Dialogs ergeben könnte.

Nicht immer ist die Umgruppierung einzelner Dialogoptionen in andere Menüzweige oder Ebenen sinnvoll, denn die Optionen von Menüs sollten von ihren bedeutungstragenden Inhalten her eine Einheit bilden. In Datenstrukturen zum Beispiel gemäß Fig. 1a oder Fig. 2a und/oder direkt in einem Dialogzustand zugewiesenen Speicherbereichen des Dialogsystems können deshalb zusätzliche Informationen enthalten sein, die unter Umständen als Adaptionssperren in Bezug auf andere Menüoptionen und/oder Dialogzustände wirken. Andererseits können auch explizit erlaubte Kombinationsmöglichkeiten oder Hinweise darauf in anderen Datenstrukturen erfasst werden. Zur hierarchischen Beschreibung möglicher Zusammenfassungen bedeutungsverwandter Informationen können außerdem Ontologien eingesetzt werden.

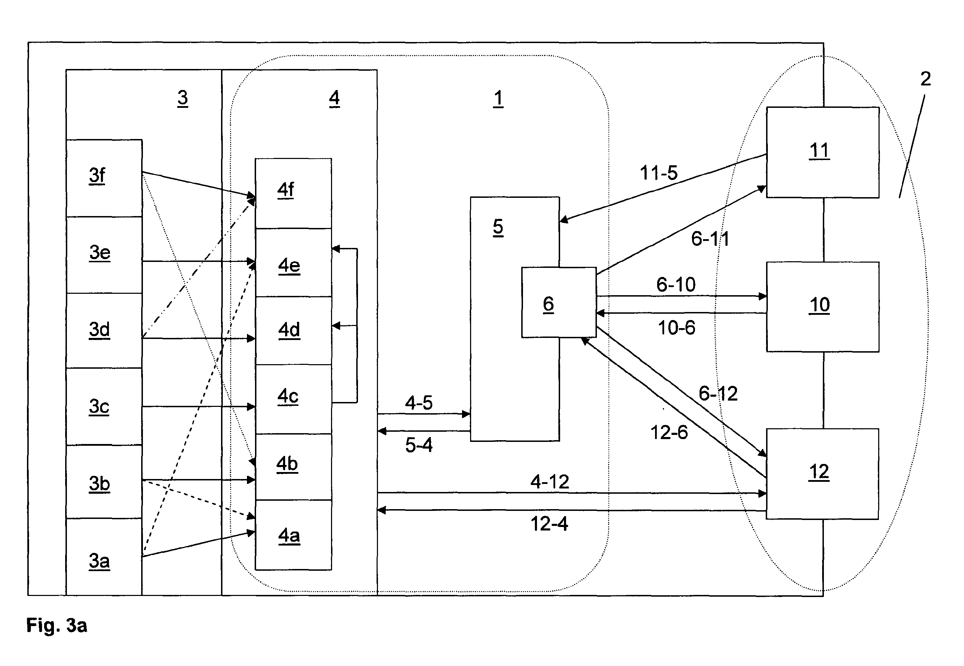

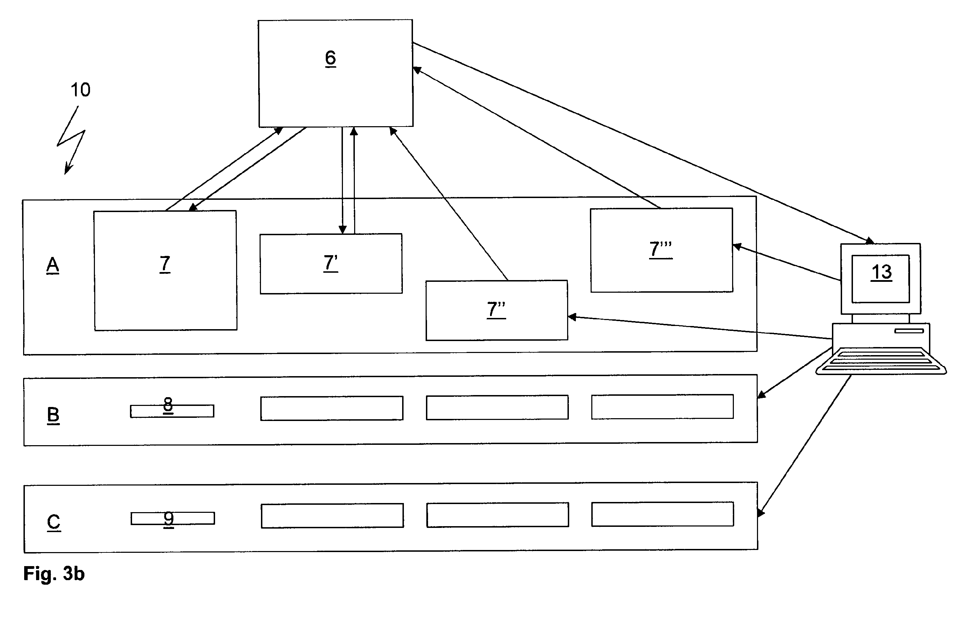

Teilstrukturen eines zur Durchführung des Verfahrens geeigneten Dialogsystems sind beispielhaft in den Figuren 3a und 3b in schematischer Darstellung gezeigt. Bei dem in der Fig. 3a gezeigten Beispiel handelt es sich um eine Teilstruktur eines Sprachdialogsystems. Auf die Darstellung möglicher Ein- und Ausgabemittel, wie Mikrofon, Tastatur, Maus, beziehungsweise Lautsprecher, Display/Bildschirm (zum Bildschirm 13 siehe zum Beispiel Fig. 3b) und dergleichen wurde in der Fig. 3a verzichtet. Neben diesen nicht gezeigten Ein- und Ausgabemitteln umfasst das dargestellte Sprachdialogsystem Mittel 3 zur Eingabeerkennung, vorliegend Mittel 3e zur Emotionserkennung, Mittel 3d zur Sprecheridentifikation, Mittel 3c zur Sprecherklassifizierung, Mittel 3b zur Sprachenerkennung beziehungsweise Sprachenidentifikation (englisch: "language identification" oder "language classification") und Mittel 3a zur Spracherkennung und/oder zur Wahlton-, respektive DTMF-Ton-Erkennung. In dem dargestellten Ausführungsbeispiel werden die Mittel 3 zur Eingabeerkennung noch durch Mittel3f zur Feststellung einer Anschluss-/Endgerätekennung (zum Beispiel, wie bereits erwähnt, CLI, HLR, IP-Adresse) ergänzt. Die vorgenannten Eingabeerkennungsmittel arbeiten, was die Vielzahl der zwischen den Komponenten verlaufenden Pfeile verdeutlichen soll, in komplexer Weise mit zugehörigen Auswertemitteln 4 zusammen. Letztere sind Bestandteil einer Steuer- und Verarbeitungseinheit 1 und umfassen Mittel 4f zur Feststellung einer Nutzerkennung, Mittel 4e zur Feststellung von Emotionszuständen, Mittel 4d zur Ermittlung eines Sprechers, Mittel 4c zur Ermittlung einer Sprecherklasse, Mittel 4b zur Ermittlung einer gesprochenen Sprache und Mittel 4a zur Auswertung von Spracheingaben mit zum Beispiel deterministischen und/oder statistischen Grammatiken, zum so genannten Natural Language Understanding. Mit der zuvor erläuterten Systemebene ist als Teil der Steuer- und Verarbeitungseinheit 1 ein Interaktions-/Applikationsmanager 5 verbunden. Dieser umfasst ein Funktionsmodul 6 zum Austausch applikationsspezifischer Daten 11, nutzerklassenspezifischer Daten 10 und nutzerspezifischer Daten 12, welche in entsprechenden Speicherbereichen 2 des Systems gehalten werden. Bei den applikationsspezifischen Daten 11 kann es sich um bestimmte wiederzugebende Nachrichtentexte, auszugebende Informationen, zum Beispiel zu Verfügbarkeitszeiträumen des Systems, Rufnummern, Adressen oder ähnliches des Anbieters der Applikation beziehungsweise des Systembetreibers handeln.

Durch die Fig. 3b wird eine Beispielstruktur für nutzerklassenspezifische Daten 10 gegeben. Dabei werden klassenspezifisch, im Beispiel für Klassen A bis C, Zähler 7, 8, 9 für Übergänge zwischen Dialogzuständen, gegebenenfalls aus diesen Zählern abgeleitete Werte 7', jeweils zu betrachtende Zeiträume 7" sowie Grenzwerte 7''' und Regeln für Zähler und/oder aus ihnen abgeleitete Werte verwaltet und gegebenenfalls beziehungsweise erforderlichenfalls administriert.

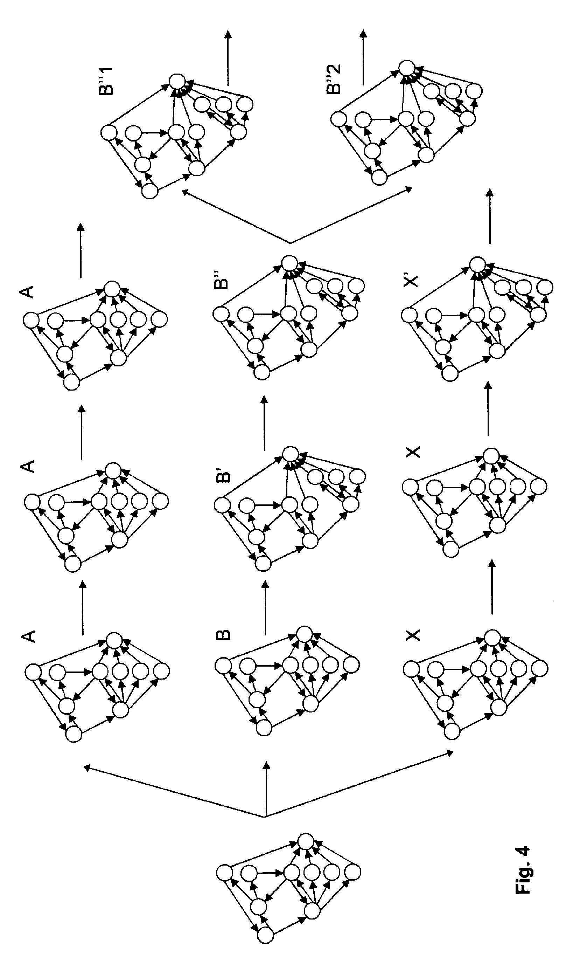

Die Fig. 4 zeigt beispielhaft die Entwicklung klassenspezifischer Dialogstrukturen. Das Beispiel geht aus von einer initialen Dialoggrundstruktur, welche aber schon beim Systemstart für unterschiedliche Nutzerklassen in verschiedene initiale Dialogstrukturen diversifiziert wird. In der Darstellung ist zu erkennen, dass die Dialogstruktur für die Klasse B, ausgehend von der zugehörigen initialen Dialogstruktur, zuerst entsprechend den im System hinterlegten Regeln verändert, das heißt an mutmaßliche Bedürfnisse der Personen der Nutzerklasse B adaptiert, das heißt in B' überführt wird. Eine Adaption der Dialogstruktur für die Klasse X erfolgt erst zu einem späteren Zeitpunkt, während innerhalb des betrachteten Zeitraums eine Adaption der Dialogstruktur bezüglich der Bedürfnisse der der Klasse A angehörenden Benutzer nicht erforderlich ist. Zu erkennen ist ferner, dass nach einer gewissen Dauer des Betriebs des Dialogsystems auf der Grundlage vorangegangener Adaptionen des Dialogs für die Klasse B und entsprechender im System gehaltener Regeln durch das Dialogsystem eine neue Nutzerklasse kreiert wird. Danach werden die ursprünglich der Nutzerklasse B zugeordneten Benutzer auf eine Nutzerklasse B1 und eine Nutzerklasse B2 mit den Dialogbeschaffenheiten beziehungsweise - strukturen B"1 und B"2 aufgeteilt. Die Beschaffenheit des Dialoges beziehungsweise die Dialogstruktur zum Zeitpunkt dieser Aufteilung wird dann im Kontext der vorhergehenden Erläuterungen als initiale Dialogstruktur der Klasse B1 beziehungsweise der Klasse B2 aufgefasst. Unterschiedlich klassenspezifisch strukturierte Dialoge und/oder Teildialoge können dabei nicht nur durch Nutzung unterschiedlicher Speicherbereiche 2, das heißt durch das Abspeichern einer Vielzahl möglicher unterschiedlicher Dialogstrukturen erreicht werden. Ebenfalls möglich ist eine entsprechende klassenspezifische, gegebenenfalls auch in Form einer Baumstruktur abgelegte Parametrierung für einen in einem einzelnen Speicherbereich abgelegten Dialog und/oder Teildialog, welcher dann je nach Parametrierung unterschiedlich verarbeitet wird. (zum Beispiel klassenspezifische Verzweigungen, Abfragen/Informationsausgaben/Prompts, klassenspezifische Promptgeschwindigkeiten, Dialogstrategien, Personadesign/Sprecher, Promptstil).

Wie bereits mehrfach ausgeführt, können Grenzwerte bei deren Überschreiten oder Unterschreiten eine nutzerklassenspezifische Adaption des Dialogs erfolgt, für Zähler, Gruppen von Zählern oder aus den Zählern abgeleitete Größen festgelegt werden. Die Zähler, Zählergruppen und abgeleiteten Größen sowie ihre zugehörigen Grenzwerte können in Zuordnung zu den Zustandsübergängen und den jeweiligen Nutzerklassen vorzugsweise in einer mehrdimensionalen Matrix gespeichert werden. An dieser Stelle sollen beispielhaft weitere mögliche, aus den Nutzungszählern oder Gruppen von Zählern abgeleitete Größen angegeben werden. Folgende solcher abgeleiteten Größen kommen in Betracht.

a.) Zähleränderungen innerhalb definierter Zeiträume bzw. die Zählgeschwindigkeit ($\Delta Z/\Delta t$). Diese Werte repräsentieren für bestimmte Dialoge meist kurzfristige, spontane Änderungen des Verhaltens eines Benutzers und/oder des Nutzerverhaltens in mindestens einer Klasse, z.B. in Folge sportlicher Ereignisse

b.) Das Produkt aus dem Mittelwert zweier Zählerwerte, die einen vorgegebenen Zeitraum begrenzen, und der Dauer dieses Zeitraumes $[(Z_1+Z_2)/2]\Delta t$ oder das Intergral der ermittelten Zählfunktion, die den Zählerstand zu einem definierten Zeitpunkt repräsentiert. An Stelle der Auswertung der Zählgeschwindigkeit können auch die hier genannten Werte zur Beurteilung der Notwendigkeit der Adaption des Dialoges zum Beispiel für eine Nutzerklasse verwendet werden. Diese Werte führen im Vergleich zur Zählgeschwindigkeit eher zu einer weicheren Bewertung von Zähleränderungen, das heißt spontane Reaktionen fallen hier weniger ins Gewicht.

c.) Funktionale Kombinationen mehrerer Zählerwerte und/oder verschiedener Übergangswerte, zum Beispiel die Summe mehrerer Zähler und/oder anderer Ableitungen, z.B. die Summe der Anzahl der Übergänge vom Dialogzustand Z3 zu den Dialogzuständen Z7, Z8, Z9 (gemäß Fig. 1a) oder die Differenz zwischen der Anzahl der Übergänge vom Dialogzustand Z1 zum Dialogzustand Z3 und der Anzahl der Übergänge vom Dialogzustand Z3 zum Dialogzustand Z6. Die Art der funktionalen Kombinationen wird durch einen Teil der Regeln repräsentiert. Die vorgenannten Kombinationen können daher ebenfalls Bestandteil der Regeln sein.

d.) Korrelationsfaktoren und/oder Kovarianzwerte und/oder diese Parameter repräsentierende Werte zwischen und/oder in Reihen von Werten (zum Beispiel Zählerwerte und/oder andere Ableitungen davon) die im System erfasst werden. Korrelieren zum Beispiel die Übergänge von einem Menüpunkt zu mindestens einem daraus folgenden Zustand sehr stark mit einem Übergang eines anderen Menüpunkts zu mindestens einem anderen Zustand, so kann es angeraten sein, dass die entsprechenden Optionen verschiedener Menüpunkte automatisch und/oder administrativ in einem Menüpunkt zusammengefasst werden. Administrativ durchgeführte Änderungen der Dialogstruktur können auch halbautomatisch nach Anzeige automatisch errechneter, möglicher Änderungen und gegebenenfalls administrativen Korrekturen durchgeführt werden.

e.) Summe oder andere funktionale Zusammenhänge der Aufwände für mindestens eine Nutzerklasse für mindestens einen Dialogübergang.

f.) Wahrscheinlichkeitswerte, die aus einer größeren Zahl von Zählerwerten berechnet wurden, und zum Beispiel Übergangswahrscheinlichkeiten repräsentieren.

Wie dem Kontext aller vorhergehenden Ausführungen zu entnehmen ist, beziehen sich Änderungen der Beschaffenheit des Dialogs nicht nur, wie in den Beispielen gezeigt, auf die Reihenfolge und den Inhalt von Meldungen/Menüoptionen, sondern auch auf deren Erscheinungsweise. Dies betrifft zum Beispiel das Layout an einem Display ausgegebener Mitteilungen und Prompts, den Promptstil oder, im Hinblick auf akustische Ausgaben des Dialogsystems, neben der Sprache eventuell auch den Sprechertyp (zum Beispiel männlich oder weiblich). Ferner kann die Veränderung der Erscheinungsweise eines Dialogs beispielsweise auch in veränderten Sprechgeschwindigkeiten oder überhaupt in einer Veränderung der zeitlichen Abfolge, das heißt der Geschwindigkeit des Aufeinanderfolgens von Meldungen, Prompts beziehungsweise Menüpunkten bestehen. Auch können unterschiedliche sozio-kulturelle Hintergründe verschiedener Nutzerklassen den Gebrauch von unterschiedlichen Ausdruckweisen zur Darstellung gleicher Sachverhalte bedingen, das heißt in einer Nutzerklasse ist es unter Umständen nicht üblich, bestimmte ursprünglich in der Grammatik einer Sprachverarbeitungs- und Ausgabeeinheit enthaltene oder zusätzlich vorgesehene Ausdruckweisen zu gebrauchen. Ähnlich, wie für die Optimierung von Dialogstrukturen vorgesehen, werden nun auch Zähler und Grenzwerte eingeführt, die mit Grammatikregeln und/oder Wörtern eines Vokabulars korrespondieren, welche für die Optimierung vorgesehen sind. Einer Menüoption können zum Beispiel mehrere Ausdrucksweisen, Folgen von Ausdrücken und damit auch Wörter (z.B. Synonyme) und/oder Grammatikregeln entsprechen, welche den gleichen Sachverhalt oder Nutzerwunsch zum Ausdruck bringen. So, wie für verschiedene Zweige zum Beispiel von Menüoptionen Zähler mit entsprechenden Grenzwerten und gegebenenfalls korrespondierenden Ableitungen eingeführt werden, können derartige Parameter auch einzelnen Ausdruckweisen eines Sachverhalts (zum Beispiel Synonymen für die gleiche Menüoption) in einem Grammatikregelwerk zugeordnet werden. Die Häufigkeit der Benutzung bestimmter Ausdruckweisen für einen Sachverhalt kann durch die Applikation und/oder den Spracherkennungsalgorithmus über einen festgelegten Zeitraum $\Delta t$ klassenspezifisch und/oder nutzerspezifisch festgestellt werden. Dabei wird der Zähler für eine Ausdrucksweise dann inkrementiert, wenn entweder die Erkennung der Ausdruckweise mit hoher Sicherheit erfolgte oder wenn in der Anwendung die mit mittlerer Sicherheit erkannte Ausdrucksweise durch das Dialogsystem zurückgefragt wird und der Nutzer diese im Dialog mit dem System positiv bestätigt. Wird analog zur Optimierung der Dialogstruktur ein Grenzwert der Summe aller Zähler von verschiedenen Ausdrucksweisen für eine Menüoption erreicht, so kann auch eine Optimierung der Grammatikregeln erfolgen. Dazu können zum Beispiel aus dem Verhältnis der Nutzungshäufigkeit einzelner Ausdruckweisen oder Folgen von Ausdrucksweisen und der entsprechenden Grammatikregeln zur Summe der Nutzungshäufigkeit aller Ausdruckweisen für den gleichen Sachverhalt (zum Beispiel eine Menüoption) Parameter berechnet werden, welche die Nutzungswahrscheinlichkeit der Ausdruckweisen (Folgen von Ausdrucksweisen, Grammatikregeln) widerspiegeln. Diese errechneten Wahrscheinlichkeiten können nun in einer gemäß dem Stand der Technik ausgebildeten Grammatik eines Sprachverarbeitungssystems den entsprechenden Grammatikregeln zugeordnet werden, womit sich im Rahmen der klassenspezifischen Adaption von Sprachdialogen zusätzlich eine klassenspezifischen Optimierung der Erkennungsrate des Spracherkenners für die Ausdrücke ergibt, deren Grammatikregeln adaptiert wurden. Eine andere Möglichkeit der klassenspezifischen Optimierung von Grammatikregeln kann auch darin bestehen, dass bei Erreichen oder Unterschreiten eines anderen klassenspezifischen Grenzwertes für die genannten errechneten Parameter einer Ausdrucksweise entsprechende Grammatikregeln ganz aus der Gesamtgrammatik gestrichen werden, was einer Zuordnung der Wahrscheinlichkeit 0.0 (Null) zur identifizierten Grammatikregel entsprechen würde. Eine Vielzahl weiterer Möglichkeiten ist denkbar, so dass es sich bei den vorgenannten Möglichkeiten nur um ausgewählte Beispiele handelt.

**Patentansprüche**

1. Verfahren zur Anpassung der Beschaffenheit von zwischen automatischen Dialogsystemen und deren Benutzern geführten Dialogen an Eigenschaften und/oder Verhaltensweisen der Benutzer, wobei die Beschaffenheit eines jeweiligen automatisierten Dialogs durch Dialogzustände in Form von Meldungen und Prompts, die Gestaltung dieser Meldungen und Prompts und durch Menüoptionen sowie Zustandübergänge, nämlich Übergänge zwischen den vorgenannten Zuständen, deren logische Abfolge die Menübreite und -tiefe bestimmt, gegeben ist und wobei diese Beschaffenheit des Dialogs während seines Ablaufs in einer Art und Weise an den Benutzer angepasst wird, die durch eine Nutzerklasse bestimmt ist, welcher der den Dialog führende Benutzer nach in dem jeweiligen Dialogsystem hinterlegten und umgesetzten Regeln aufgrund während des Dialogs von ihm mitgeteilter oder durch das Dialogsystem automatisch ermittelter Eigenschaften und/oder seiner Verhaltensweisen und/oder aufgrund seiner Identifizierung durch das System und früher zu seiner Person erhobener Angaben zugeordnet wird, **dadurch gekennzeichnet, dass** die Art und Weise der Anpassung der Beschaffenheit des Dialogs an die Benutzer einer Nutzerklasse veränderlich ist und dies **dadurch** erreicht wird, dass in dem Dialogsystem für ausgewählte Zustandsübergänge des systemseitigen Dialogteils nutzerklassenspezifische Nutzungszähler geführt und beim Durchlaufen der jeweiligen Zustandübergänge während der Dialogabarbeitung inkrementiert oder dekrementiert werden und dass beim Überschreiten oder Unterschreiten eines für einen Zähler, eine Gruppe von Zählern oder für eine von den Zählern abgeleitete Größe festgelegten Grenzwertes ein Adaptionsprozess gestartet wird, durch den die Beschaffenheit des systemseitigen Dialogteils nutzerklassenbezogen verändert wird, so dass der systemseitige Dialogteil ausgehend von einer bei seiner Implementierung im System gegebenen initialen Beschaffenheit nutzerklassenselektiv wiederholt an die Bedürfnisse der Mitglieder der jeweiligen Nutzerklasse adaptiert wird.

2. Verfahren nach Anspruch 1, **dadurch gekennzeichnet, dass** der Benutzer eines nach dem Verfahren arbeitenden Dialogssystems im Hinblick auf den Ablauf des von ihm gerade geführten Dialogs stets einer Nutzerklasse eindeutig zugeordnet ist, während er, zum Zweck der wiederholten Änderung der Art und Weise, in welcher der Dialog während des Ablaufs an Personen einer Nutzerklasse angepasst wird, gegebenenfalls gleichzeitig mehreren Nutzerklassen zugeordnet wird.

3. Verfahren nach Anspruch 2, **dadurch gekenn-** zeichnet, dass der Benutzer im Hinblick auf den Ablauf des von ihm gerade geführten Dialogs zwar stets nur einer Nutzerklasse zugeordnet ist, er aber gegebenenfalls im Verlauf des Dialogs wechselnden Nutzerklassen zugeordnet wird.

4. Verfahren nach einem der Ansprüche 1 bis 3, **dadurch gekennzeichnet, dass** Nutzerklassen auch durch Zusammenfassung anderer durch das Dialogsystem weiterhin selbstständig verwalteter Nutzerklassen gebildet werden.

5. Verfahren nach Anspruch 1 oder 4, **dadurch gekennzeichnet, dass** neue Nutzerklassen durch das Dialogsystem nach darin hinterlegten Regeln automatisch gebildet werden.

6. Verfahren nach einem der Ansprüche 1 bis 5, **dadurch gekennzeichnet, dass** der Dialog für verschiedene, zum Zeitpunkt seiner Implementierung in dem Dialogsystem angelegte oder verwaltete Nutzerklassen mit unterschiedlichen, nutzerklassenspezifischen initialen Beschaffenheiten implementiert wird.

7. Verfahren nach einem der Ansprüche 1 bis 6, wobei der hinsichtlich seiner Beschaffenheit anzupassende Dialog zumindest hinsichtlich des benutzerseitigen Dialogteils mindestens teilweise als Sprachdialog ausgebildet ist, **dadurch gekennzeichnet, dass** die Zuordnung des Benutzers zu Nutzerklassen des Dialogsystems auf der Grundlage der durch Mittel zur Sprachenidentifikation erkannten, von dem Benutzer gesprochenen Sprache erfolgt.

8. Verfahren nach Anspruch 7, **dadurch gekennzeichnet, dass** die Zuordnung des Benutzers zu Nutzerklassen des Dialogsystems nach in dem Dialogsystem hinterlegten Regeln durch Auswertung von Mitteln zur Spracherkennung automatisch erfasster Daten erfolgt.

9. Verfahren nach Anspruch 7 oder 8, **dadurch gekennzeichnet, dass** die Zuordnung des Benutzers zu Nutzerklassen des Dialogsystems auf der Grundlage eines durch Mittel zur Sprecherklassifizierung erkannten, von dem Benutzer gesprochenen Akzents, Dialekts oder Soziolekts erfolgt.

10. Verfahren nach einem der Ansprüche 7 bis 9, **dadurch gekennzeichnet, dass** die Zuordnung des Benutzers zu Nutzerklassen des Dialogsystems auf der Grundlage seines anhand der Stimme durch die Mittel zur Sprecherklassifizierung bestimmten Alters erfolgt.

11. Verfahren nach einem der Ansprüche 1 bis 10, wobei der hinsichtlich seiner Beschaffenheit anzupassende Dialog zumindest hinsichtlich des benutzerseitigen Dialogteils mindestens teilweise als Sprachdialog ausgebildet ist, **dadurch gekennzeichnet, dass** die Zuordnung des Benutzers zu Nutzerklassen des Dialogsystems auf der Grundlage seines anhand der Stimme durch die Mittel zur Sprecherklassifizierung bestimmten Geschlechts erfolgt.

12. Verfahren nach einem der Ansprüche 1 bis 11, **dadurch gekennzeichnet, dass** die Zuordnung des Benutzers zu Nutzerklassen des Dialogsystems automatisch nach in dem Dialogsystem hinterlegten Regeln durch Auswertung von Mitteln zur Emotionserkennung erfasster Daten erfolgt

13. Verfahren nach einem der Ansprüche 1 bis 12, **dadurch gekennzeichnet, dass** durch das Dialogsystem automatisch ermittelte Eigenschaften und/oder Verhaltensweisen des Benutzers mit Konfidenzwerten verknüpft werden und entsprechende Eigenschaften und/oder Verhaltensweisen im Falle einer nicht ausreichenden Konfidenz für die Zuordnung des Benutzers zu Nutzerklassen des Dialogsystems nicht berücksichtigt werden.

14. Verfahren nach einem der Ansprüche 1 bis 13, **dadurch gekennzeichnet, dass** die für die Zuordnung des Benutzers zu Nutzerklassen des Dialogsystems verwendeten Daten, nämlich zu seiner Person ermittelte Eigenschaften oder Verhaltensweisen oder früher erhobene Angaben, gewichtet werden, so dass einzelne dieser Daten bei der Klassifizierung des Benutzers hinsichtlich seiner Zuordnung zu Nutzerklassen des Dialogsystems Vorrang gegenüber anderen haben.

15. Verfahren nach Anspruch 14, **dadurch gekennzeichnet, dass** in die Gewichtung der zur Klassifizierung des Benutzers verwendeten Daten mit den entsprechenden Daten verknüpfte Konfidenzwerte einfließen.

16. Verfahren nach einem der Ansprüche 1 bis 15, **dadurch gekennzeichnet, dass** die den Zustandsübergängen zugeordneten Zähler gewichtet werden, so dass die jeweiligen Zählerstände der Zähler in eine nutzerklassenbezogene Veränderung der Beschaffenheit des Dialogs mit unterschiedlichem Gewicht eingehen.

17. Verfahren nach einem der Ansprüche 1 bis 16, **dadurch gekennzeichnet, dass** die Zuordnung des Benutzers zu Nutzerklassen des Dialogsystems durch Kombination zu ihm bekannter oder ermittelter Eigenschaften und/oder Verhaltensweisen mit zeitlichen, örtlichen und/oder technischen Parametern erfolgt.

18. Automatisches Dialogsystem zur Durchführung des Verfahrens nach Anspruch 1, welches hard- und softwarebasiert ist und mindestens eine Steuer- und Verarbeitungseinheit (1) mit Mitteln (3) zur Eingabenerkennung und Auswertemitteln (4) zur Auswertung von Eingaben, einen oder mehrere Speicher (2), Eingabemittel für Dialogeingaben eines Benutzers und Eingaben eines Administrators sowie Ausgabemittel zur Ausgabe von Systemmitteilungen und Dialogprompts aufweist, wobei ein Bestandteil der in dem oder den Speichern (2) des Dialogsystems gehaltenen Daten eine Nutzergruppenverwaltung ist, **dadurch gekennzeichnet, dass** durch die Steuer- und Verarbeitungseinheit (1) in dem oder den Speichern (2) des Dialogsystems für ausgewählte Zustandsübergänge des systemseitigen Teils des oder der in dem Dialogsystem abgebildeten Dialoge nutzerklassenspezifische Nutzungszähler sowie ein Regelwerk verwaltet werden, nach welchem der systemseitige Dialogteil beim Überschreiten oder Unterschreiten von Grenzwerten, welche den Zählern, einer Gruppe von Zählern oder von ihnen abgeleiteten Größen zugeordnet sind, durch eine von der Steuer- und Verarbeitungseinheit (1) verarbeitete Software, ausgehend von einer bei seiner Implementierung im System gegebenen initialen Beschaffenheit, wiederholt nutzerklassenselektiv an die Bedürfnisse der Mitglieder einer jeweiligen Nutzerklasse ohne zusätzliche administrative Eingriffe adaptiert wird.

19. Dialogsystem nach Anspruch 19, **dadurch gekennzeichnet, dass** dieses hard- und softwarebasierte Mittel (3b, 4b) zur Sprachenidentifikation umfasst.

20. Dialogsystem nach Anspruch 18 oder 19, **dadurch gekennzeichnet, dass** dieses hard- und softwarebasierte Mittel (3a, 4a) zur Spracherkennung und -auswertung umfasst.

21. Dialogsystem nach einem der Ansprüche 18 bis 20, **dadurch gekennzeichnet, dass** dieses hard- und softwarebasierte Mittel (3c, 3d) zur Sprecheridentifikation und/oder Sprecherklassifizierung und zugehörige Auswertemittel (4c, 4d) umfasst.

22. Dialogsystem nach einem der Ansprüche 18 oder 21, **dadurch gekennzeichnet, dass** dieses hard- und softwarebasierte Mittel zur Handschriftenerkennung umfasst.

23. Dialogsystem nach einem der Ansprüche 18 bis 22, **dadurch gekennzeichnet, dass** dieses hard- und softwarebasierte Mittel (3e, 4e) zur Emotionserkennung und -auswertung umfasst.

**Fig. 1a**

**Fig. 1b**

Fig. 2a

**Fig. 2b**

Fig. 3a

Fig. 3b

Fig. 4

**Europäisches Patentamt**

# EUROPÄISCHER RECHERCHENBERICHT

Nummer der Anmeldung

EP 07 07 5982

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br>A | EP 1 107 229 A (COMVERSE NETWORK SYST INC [US]) 13. Juni 2001 (2001-06-13)<br>* Absätze [0001], [0007], [0011], [0019], [0022], [0031], [0032], [0039], [0042], [0043], [0047], [0053], [0056], [0062], [0067], [0073], [0077]; Abbildungen 3,6 *<br>----- | 1,5-9, 13,18-21<br>2-4, 10-12, 14-17, 22,23 | INV.<br>G10L15/22<br>G06F17/27 |
| A | HOLZAPFEL H ET AL: "Integrating emotional cues into a framework for dialogue management"<br>MULTIMODAL INTERFACES, 2002. PROCEEDINGS. FOURTH IEEE INTERNATIONAL CONFERENCE ON 14-16 OCT. 2002, PISCATAWAY, NJ, USA,IEEE, 14. Oktober 2002 (2002-10-14), Seiten 141-146, XP010624307<br>ISBN: 0-7695-1834-6<br>* das ganze Dokument *<br>----- | 1-23 | |
| A | ANDREAS HARRER ET AL: "Creating cognitive tutors for collaborative learning: steps toward realization"<br>USER MODELING AND USER-ADAPTED INTERACTION, KLUWER ACADEMIC PUBLISHERS, DO,<br>Bd. 16, Nr. 3-4,<br>18. August 2006 (2006-08-18), Seiten 175-209, XP019438178<br>ISSN: 1573-1391<br>* Seite 180, Zeile 1 - Seite 181, Zeile 8 *<br>----- | 1-23 | |

RECHERCHIERTE SACHGEBIETE (IPC)

G10L
G06F

Der vorliegende Recherchenbericht wurde für alle Patentansprüche erstellt

| Recherchenort | Abschlußdatum der Recherche | Prüfer |
|---|---|---|
| München | 4. April 2008 | Dobler, Ervin |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**          EP 07 07 5982

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-04-2008

| Im Recherchenbericht angeführtes Patentdokument | Datum der Veröffentlichung | Mitglied(er) der Patentfamilie | Datum der Veröffentlichung |
|---|---|---|---|
| EP 1107229          A | 13-06-2001 | US   2003004719 A1<br>US   2003046086 A1<br>US   2003046088 A1<br>US   2003004730 A1<br>US   2002198722 A1<br>US   2003004731 A1<br>US     6526382 B1 | 02-01-2003<br>06-03-2003<br>06-03-2003<br>02-01-2003<br>26-12-2002<br>02-01-2003<br>25-02-2003 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5493608 A
- EP 1102241 A1
- DE 69427347 T2

**In der Beschreibung aufgeführte Nicht-Patentliteratur**

- **KOMATANI, K.** User Modeling in Spoken Dialogue Systems for Flexible Guidance Generation. *Proceedings of EUROSPEECH,* 2003
- **HJALMARSSON, A.** Adaptive Spoken Dialogue Systems. *Centre of Speech Technology,* Januar 2005